(19) Europäisches Patentamt / European Patent Office / Office européen des brevets

(11) **EP 2 184 898 A1**

(12) **EUROPEAN PATENT APPLICATION**

(43) Date of publication:
**12.05.2010 Bulletin 2010/19**

(51) Int Cl.:
*H04L 25/02* [(2006.01)]   *H04L 25/03* [(2006.01)]
*H04L 1/06* [(2006.01)]

(21) Application number: **09013907.2**

(22) Date of filing: **05.11.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **10.11.2008 US 113145 P**
**28.10.2009 US 607719**

(71) Applicant: **Broadcom Corporation**
**Irvine, CA 92617 (US)**

(72) Inventor: **Kim, Joonsuk**
**San Jose, CA 95129 (US)**

(74) Representative: **Jehle, Volker Armin**
**Bosch Jehle**
**Patentanwaltsgesellschaft mbH**
**Flüggenstrasse 13**
**80639 München (DE)**

(54) **A 4x2 SFBC/STBC system with 2 spatial streams using angle feedback**

(57) Aspects of a method and system for a 4x2 SFBC/STBC system with 2 spatial streams using angle feedback are presented. Aspects of the system include a 4x2 SFBC/STBC communication diversity system with 2 distinct spatial streams using angle feedback. A receiving station may concurrently receive signals. A channel estimate matrix may be computed based on the received signals. A rotation angle value may be computed based on the channel estimate matrix. The receiving station may transmit the computed rotation angle via feedback information to a transmitting station. The transmitting station may utilize the received feedback information to generate a plurality of 4 distinct transmit chain signals based on data symbols received via a plurality of 2 spatial streams. Each of the distinct transmit chain signals may comprise a plurality of codewords. The transmitting station may concurrently transmit the plurality of transmit chain signals via the plurality of transmitting antennas.

```
┌─────────────────────┐
│ Concurrently Receive │
│ a Plurality of Signals │
│        702          │
└─────────────────────┘
          │
          ▼
┌─────────────────────┐
│   Decode Preamble    │
│        Data          │
│        704          │
└─────────────────────┘
          │
          ▼
┌─────────────────────┐
│ Compute Channel Estimates │
│ Matrices H and H^H   │
│        706          │
└─────────────────────┘
          │
          ▼
┌─────────────────────┐
│  Compute Square      │
│   Matrix H_sq        │
│        708          │
└─────────────────────┘
          │
          ▼
┌─────────────────────┐
│ Determine Crosstalk/ │
│ Off-Diagonal Values in │
│ H_sq: δ_1, δ_2       │
│        710          │
└─────────────────────┘
          │
          ▼
┌─────────────────────┐
│ Compute Rotation Angle/ │
│ Rotation Factor: θ_fb, c │
│        712          │
└─────────────────────┘
          │
          ▼
┌─────────────────────┐
│ Transmit Computed    │
│ Rotation Angle and/or │
│ Rotation Factor in   │
│ Feedback Information  │
│        714          │
└─────────────────────┘
```

**FIG. 6**

EP 2 184 898 A1

## EP 2 184 898 A1

**Description**

CROSS-REFERENCE TO RELATED APPLICATIONS/INCORPORATION BY REFERENCE

This application makes reference to, claims priority to, and claims the benefit of United States Provisional Application Serial No. 61/113,145 filed November 10,2008.

This application also makes reference to United States Patent Application Serial No. 11 /864,611 filed September 28, 2007.

Each of the above stated applications is hereby incorporated herein by reference in its entirety.

FIELD OF THE INVENTION

Certain embodiments of the invention relate to data communication. More specifically, certain embodiments of the invention relate to a method and system for a 4x2 SFBC/STBC system with 2 spatial streams using angle feedback.

BACKGROUND OF THE INVENTION

Quasi-orthogonal space time block coding (STBC) is a method for diversity transmission that is utilized in the field of wireless communication. The appeal of quasi-orthogonal STBC is that it seeks to enable wireless communication systems to utilize advantages of diversity transmission at a transmitting station, while allowing simplified decoding techniques at a receiving station.

Diversity transmission enables one or more streams of data to be transmitted via a plurality of transmitting antennas. Diversity transmission systems are described by the number of transmitting antennas and the number of receiving antennas. For example, a diversity transmission system, which utilizes four transmitting antennas to transmit signals and a single antenna to receive signals, may be referred to as a 4x1 diversity transmission system, while a diversity transmission system, which utilizes four transmitting antennas to transmit signals and two receiving antennas to receive signals, may be referred to as a 4x2 diversity transmission system.

Each data stream may comprise a sequence of data symbols. Each data symbol comprises at least a portion of the data from the data stream. In a diversity transmission system, which utilizes orthogonal frequency division multiplexing (OFDM), each data symbol is referred to as an OFDM symbol. Each OFDM symbol may utilize a plurality of frequency carrier signals, wherein the frequencies of the carrier signals span the bandwidth of an RF channel. RF channel bandwidths may be determined, for example, based on applicable communication standards utilized in various communication systems. Exemplary RF channel bandwidths for IEEE 802.11 wireless local area network (WLAN) systems are 20 MHz and 40 MHz. One or more of the frequency carrier signals within an RF channel bandwidth may be utilized to transmit at least a portion of the data contained in the OFDM symbol. The size of each portion of the data, as measured in bits for example, may be determined based on one or more constellation maps. The constellation map(s) may, in turn, be determined by one or more modulation types that are utilized to transport the data contained in the OFDM symbol via the RF channel.

In general, each of the data streams, which in turn comprise one or more OFDM symbols, may be referred to as a spatial stream. A diversity transmission system, which utilizes $N_{TX}$ transmitting antennas to transmit signals and $N_{RX}$ receiving antennas to receive signals, may be referred to as an $N_{TX}xN_{RX}$ diversity transmission system.

In a diversity transmission system, each of the plurality of $N_{TX}$ transmitting antennas may transmit data symbols from a corresponding plurality of $N_{TX}$ space time streams. The $N_{TX}$ space time streams may be generated from a number ($N_{SS}$) of spatial streams. Each of the data symbols in each space time stream may be referred to as a codeword. In a diversity transmission system, which utilizes quasi-orthogonal STBC, at any given time instant each of the plurality of $N_{TX}$ transmitting antennas may transmit a codeword, which comprises one of the OFDM symbols, or a permutated version of the OFDM symbol, from a selected one of the $N_{SS}$ spatial streams.

A variation of STBC is space frequency block coding (SFBC). In a diversity transmission system, which utilizes SFBC, each codeword may comprise a subset of the frequency carriers, or tones, and corresponding data portions, in an OFDM symbol. These subsets of frequency carriers may be referred to as tone groups.

In an STBC communication diversity system, each of the codewords may be generated based on an OFDM symbol, wherein each OFDM symbol is generated based on data from a selected spatial stream at a given time instant. In various embodiments of the invention, one or more of the concurrently codewords transmitted from a transmitting station may comprise a rotated and/or complex conjugate version of a corresponding OFDM symbol. A group of concurrently transmitted codewords may be transmitted during consecutive transmission opportunities (TXOPs) may comprise a codeword set.

In an SFBC communication diversity system, each of the codewords may be generated based on a portion of an OFDM symbol. Each portion may comprise one of a plurality of tone groups, where each tone group comprises a corresponding plurality of tones and where each tone represents a distinct frequency carrier, or frequency, within an OFDM symbol bandwidth. The collective set of tone groups comprise the set of frequency carriers within the OFDM symbol bandwidth. Each tone may be represented by $f_j(i)$, where i represents a tone group and j represents an index for each of the frequencies within the $i^{th}$ tone group. Each of the codewords generated from an OFDM symbol may by transmitted concurrently via a single transmitting antenna. Each of the plurality of transmitting antennas in an SFBC communication diversity system may receive codewords via a corresponding transmit chain. Accordingly, the codewords may be communicated from a transmit chain to a corresponding transmitting antenna via transmit chain signals. Each of the transmitting antennas in the SFBC communication diversity system may transmit the chain signals concurrently with one or more of the remaining transmitting antennas.

In an SFBC communication diversity system, a codeword set comprises the set of codewords that are concurrently transmitted across the set of transmitting antennas. In other words, a codeword set comprises the collective plurality of codewords that are concurrently transmitted across the set of transmitting antennas. For each transmit chain, a plurality of codewords may be generated based on an OFDM symbol.

In the case of diversity transmission, with either STBC or SFBC, the transmitted signal may be modified as it travels across a communication medium to the receiving station. This signal-modifying property of the communication medium may be referred to as fading. Each of the signals transmitted by each of the plurality of transmitting antennas may experience differing amounts of fading as the signals travel through the communication medium. This variable fading characteristic may be represented by a transfer function matrix, H, which comprises a plurality of transfer function coefficients, $h_j$, that represent the differing fading characteristics experienced by the transmitted signals.

The transmitted signals may be received by one or more receiving antennas located at a receiving station. The receiving station may process the received signals to determine estimated values for the codewords carried by the transmitted signals. However, the task of computing estimated values for the codewords may be computationally complex even when quasi-orthogonal STBC or SFBC are utilized.

Further limitations and disadvantages of conventional and traditional approaches will become apparent to one of skill in the art, through comparison of such systems with some aspects of the present invention as set forth in the remainder of the present application with reference to the drawings.

BRIEF SUMMARY OF THE INVENTION

A method and system for a 4x2 SFBC/STBC system with 2 spatial streams using angle feedback, substantially as shown in and/or described in connection with at least one of the figures, as set forth more completely in the claims. According to an aspect, a method for processing signals comprises:

performing by one or more processors and/or circuits:

computing one or more channel estimate matrices based on a concurrently received plurality of signals;
computing a square matrix based on said computed one or more channel estimated matrices;
determining one or more distinct off-diagonal values in said computed square matrix;
selecting one or more rotation angle values based on a minimum condition, wherein said minimum condition is based on said determined one or more distinct off-diagonal values; and
transmitting a binary representation of said selected one or more rotation angle values as feedback information.

Advantageously, the method further comprises selecting said one or more rotation angle values from a plurality of candidate rotation angle values.
Advantageously, the method further comprises determining a number for said plurality of candidate rotation angle values based on a selected plurality of quantization bits.
Advantageously, said binary representation of said selected one or more rotation angle values is based on said selected plurality of quantization bits.
Advantageously, the method further comprises computing a sum of squared values among said one or more distinct off-diagonal values for each of said plurality of candidate rotation angle values.
Advantageously, said minimum condition corresponds to a minimum value among said computed plurality of sum of squared values.
Advantageously, said square matrix is computed based on a multiplication of said computed one or more channel estimate matrices and a Hermitian transformed version of said computed one or more channel estimate matrices.
According to an aspect, a system for processing signals comprises:

one or more circuits that are operable to compute one or more channel estimate matrices based on a concurrently received plurality of signals;

said one or more circuits are operable to compute a square matrix based on said computed one or more channel estimated matrices;

said one or more circuits are operable to determine one or more distinct off-diagonal values in said computed square matrix;

said one or more circuits are operable to select one or more rotation angle values based on a minimum condition, wherein said minimum condition is based on said determined one or more distinct off-diagonal values; and

said one or more circuits are operable to transmit a binary representation of said selected one or more rotation angle values as feedback information.

Advantageously, said one or more circuits are operable to select said one or more rotation angle values from a plurality of candidate rotation angle values.

Advantageously, said one or more circuits are operable to determine a number for said plurality of candidate rotation angle values based on a selected plurality of quantization bits.

Advantageously, said binary representation of said selected one or more rotation angle values is based on said selected plurality of quantization bits.

Advantageously, said one or more circuits are operable to compute a sum of squared values among said one or more distinct off-diagonal values for each of said plurality of candidate rotation angle values.

Advantageously, said minimum condition corresponds to a minimum value among said computed plurality of sum of squared values.

Advantageously, said square matrix is computed based on a multiplication of said computed one or more channel estimate matrices and a Hermitian transformed version of said computed one or more channel estimate matrices.

According to an aspect, a system for processing signals comprises:

one or more circuits that are operable to determine a rotation angle value based on received feedback information;

said one or more circuits are operable to compute a rotation factor value based on said determined rotation angle value;

said one or more circuits are operable to generate a plurality of transmit chain signals based on said computed rotation factor value and a plurality of data symbol values; and

said one or more circuits are operable to transmit said generated plurality of transmit chain signals.

Advantageously, said plurality of data symbol values are received via a plurality of spatial streams.

Advantageously, each of said generated plurality of transmit chain signals comprises a distinct plurality of codeword values.

Advantageously, said one or more circuits are operable to generate said distinct plurality of codeword values based on said computed rotation factor value and at least a portion of said plurality of data symbol values.

Advantageously, said portion of said plurality of data symbol values is received via a single spatial stream among a plurality of spatial streams.

Advantageously, said rotation factor is computed as an exponential function of said determined rotation angle value.

These and other advantages, aspects and novel features of the present invention, as well as details of an illustrated embodiment thereof, will be more fully understood from the following description and drawings.

BRIEF DESCRIPTION OF SEVERAL VIEWS OF THE DRAWINGS

FIG. 1 is an exemplary wireless communication system, which may be utilized in connection with an embodiment of the invention.

FIG. 2 is an exemplary transceiver comprising a plurality of transmitting antennas and a plurality of receiving antennas, which may be utilized in connection with an embodiment of the invention.

FIG. 3 is an exemplary diagram illustrating channel feedback, in accordance with an embodiment of the invention.

FIG. 4 is an exemplary block diagram of STBC with diversity reception, in accordance with an embodiment of the invention.

FIG. 5 is an exemplary block diagram of SFBC with diversity reception, in accordance with an embodiment of the invention.

FIG. 6 is a flowchart illustrating exemplary steps for a 4x2 STBC diversity transmission system for 2 spatial streams at a receiving station, in accordance with an embodiment of the invention.

FIG. 7 is a flowchart illustrating exemplary steps for a 4x2 STBC diversity transmission system for 2 spatial streams at a receiving station, in accordance with an embodiment of the invention.

DETAILED DESCRIPTION OF THE INVENTION

Certain embodiments of the invention may be found in a method and system for a 4x2 SFBC/STBC communication diversity system with 2 spatial streams using angle feedback. Various embodiments of the invention may comprise a method and system by which signals from 2 distinct spatial streams ($N_{SS}$=2) are utilized to generate a plurality of 4 distinct transmit chain signals ($N_{TX}$=4). Each of the transmit chain signals may be utilized by a transmitting station to transmit codewords. In various embodiments of the inventions, the plurality of transmit chain signals may be transmitted concurrently. The set of concurrently transmitted transmit chain signals may be received at a receiving station.

Based on the received signals, the receiving station may be operable to compute a channel estimate matrix. A channel estimate square matrix may be computed as a product of the computed channel estimate matrix and a Hermitian transformed version of the computed channel estimate matrix. The receiving station may be operable to determine a value for each distinct off-diagonal element in the computed channel estimate square matrix. In various embodiments of the invention, the receiving station may be operable to compute a rotation angle for which the sum of squares of the distinct off-diagonal elements is minimized. A rotation factor may be computed based on the computed rotation angle. In various embodiments of the invention, the rotation angle may be quantized based on a selected number of quantization bits. For example, in an exemplary embodiment of the invention, which utilizes n quantization bits, the rotation angle may be selected from among $2^n$ candidate rotation angle values.

The receiving station may be operable to communicate the rotation angle and/or rotation factor to the transmitting station via feedback information that is transmitted from the receiving station to the transmitting station. The transmitting station may subsequently utilize a received rotation factor to compute a rotation factor. The transmitting station may utilize a received rotation factor or computed rotation factor to generate a subsequent plurality of transmit chain signals based on the 2 distinct spatial streams. The subsequent plurality of transmit chain signals may comprise a plurality of codewords, a plurality of rotated codewords and/or a plurality of complex conjugate codewords. A given complex conjugate codeword among the plurality of complex conjugate codewords may comprise a complex conjugate version of a corresponding codeword among the plurality of codewords. At least a portion of the plurality of rotated codewords may be generated based on the rotation factor and one of more of the plurality of codewords and/or one or more of the plurality of complex conjugate codewords. The subsequent plurality of transmit chain signals may be concurrently transmitted via the plurality of transmitting antennas from the transmitting station and subsequently received via a plurality of receiving antennas at the receiving station.

The receiving station may compute channel estimates based on the subsequently received signals, previously determined rotation angle(s) and/or previously determined rotation factor(s). Based on the computed channel estimates, the receiving station may process the subsequently received signals to generate a substantially orthogonal plurality of received signals.

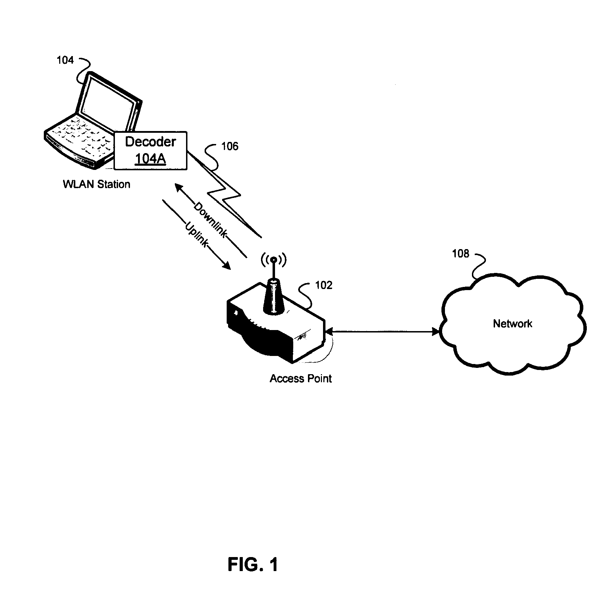

FIG. 1 is an exemplary wireless communication system, which may be utilized in connection with an embodiment of the invention. Referring to FIG. 1, there is shown an access point (AP) 102, a wireless local area network (WLAN) station (STA) 104, and a network 108. The WLAN STA 104 may comprise a decoder subsystem 104A.

The AP 102 may comprise suitable logic, circuitry, interfaces or code that may be operable to communicate wirelessly via one or more radio frequency (RF) channels 106. The STA 104 may comprise suitable logic, circuitry, interfaces or code that may be operable to communicate wirelessly via one or more radio frequency (RF) channels 106. The AP 102 and STA 104 may each comprise a plurality of transmitting antennas and/or receiving antennas. The decoder subsystem 104A may comprise suitable logic, circuitry, interfaces or code that may be operable to enable the STA 104 to concurrently receive a plurality of signals via the plurality of receiving antennas and generate a set of substantially orthogonal signals. The AP 102 may be communicatively coupled to the network 108. The network 108 may comprise suitable devices, interfaces or code that may be operable to enable the AP 102 to communicate with other devices, either within the network 108 and/or communicatively coupled to the network 108. The AP 102, STA 104 and network 108 may enable communication based on one or more IEEE 802 standards, for example IEEE 802.11.

The STA 104 may utilize the RF channel 106 to communicate with the AP 102 by transmitting signals via an uplink channel. The transmitted uplink channel signals may comprise one of more frequencies associated with a channel as determined by a relevant standard, such as IEEE 802.11. The STA 104 may utilize the RF channel 106 to receive signals from the AP 102 via a downlink channel. Similarly, the received downlink channel signals may comprise one of more frequencies associated with a channel as determined by a relevant standard, such as IEEE 802.11.

The STA 104 and AP 102 may communicate via time division duplex (TDD) communications and/or via frequency division duplex communications. With TDD communications, the STA 104 may utilize the RF channel 106 to communicate with the AP 102 at a current time instant while the AP 102 may communicate with the STA 104 via the RF channel 106 at a different time instant. With TDD communications, the set of frequencies utilized in the downlink channel may be substantially similar to the set of frequencies utilized in the uplink channel. With FDD communications, the STA 104 may utilize the RF channel 106 to communicate with the AP 102 at the same time instant at which the AP 102 utilizes the RF channel 106 to communicate with the STA 104. With FDD communications, the set of frequencies utilized in the downlink channel may be different from the set of frequencies utilized in the uplink channel.

In an exemplary embodiment of the invention, the STA 104 may concurrently receive a plurality of signals transmitted by the AP 102, which utilizes a plurality of transmitting antennas, via the downlink portion of the RF channel 106. The STA 104 may utilize a plurality of receiving antennas to receive the concurrently transmitted signals from the AP 102. The STA 104 may compute channel feedback information based on the concurrently received plurality of signals. The computed feedback information may be represented as a feedback angle and/or as a complex-valued feedback factor. The STA 104 may transmit the computed feedback information to the AP 102 via the uplink portion of the RF channel 106. In an exemplary embodiment of the invention, the feedback information may be represented as a single-bit binary value. In other exemplary embodiments of the invention, the feedback information may be represented as a two-bit, or more, binary value. In instances where the feedback angle is quantized as an m-bit binary value, the feedback information may comprise an m-bit feedback angle value that is selected by the STA 104 from one of $2^m$ candidate feedback angle values. In various exemplary embodiments of the invention, m=1 or m=2.

The AP 102 may generate codewords and/or complex conjugate codewords based on OFDM symbols received via a plurality of two spatial streams. The AP 102 may utilize the feedback information, received from STA 104, to generate rotated codewords and/or rotated complex conjugate codewords. The AP 102 may generate a subsequent plurality of transmit chain signals based on the generated codewords, rotated codewords, complex conjugate codewords and/or rotated complex conjugate codewords. The AP 102 may transmit the subsequent plurality of transmit chain signals to the STA 104 via a plurality of transmitting antennas.

The STA 104 may receive the transmitted subsequent plurality of transmit chain signals via a plurality of receiving antennas. The STA 104 may compute a channel estimate matrix based on the received signals. The STA 104 may generate a plurality of substantially orthogonal signals by processing the received signals based on a Hermitian transformed version of the computed channel estimate matrix. When represented as a matrix, the plurality of substantially orthogonal signal may comprise a plurality of off-diagonal matrix elements. In various embodiments of the invention, each of the plurality of off-diagonal matrix elements may comprise minimum values based on the previously computed rotation angle.

In various embodiments of the invention, the STA 104 may be operable to receive subsequent signals. One or more protocol data units (PDUs) may be communicated to the STA 104 via the subsequently received signals. In an exemplary embodiment of the invention, the STA 104 may be operable to compute one or more subsequent rotation angles and/or one or more subsequent rotation factors for each received PDU. The STA 104 may be operable to transmit the computed one or more subsequent rotation angles and/or the computed one or more subsequent rotation factors pursuant to the receipt of each PDU. In another exemplary embodiment of the invention, the STA 104 may be operable to compute one or more subsequent rotation angles and/or one or more subsequent rotation factors for each plurality of k (where k>1) received PDUs. The STA 104 may be operable to transmit the computed one or more subsequent rotation angles and/or one or more subsequent rotation factors upon commencement of a subsequent TXOP. In another exemplary embodiment of the invention, the STA 104 may be operable to compute one or more subsequent rotation angles and/or one or more subsequent rotation factors for each duration of t time units. The STA 104 may be operable to transmit the computed one or more subsequent rotation angles and/or one or more subsequent rotation factors upon commencement of a subsequent TXOP.

In an exemplary embodiment of the invention, the decoder subsystem 104A is operable to compute a rotation angle and/or rotation factor. The plurality of receiving antennas at the STA 104 may be coupled to the decoder subsystem. The rotation angle and/or rotation factor computed by the decoder subsystem may be transmitted, as feedback information, to the AP 102. The decoder subsystem may compute a rotation factor c as represented in the following equation:

$$c = e^{j \cdot \theta_{fb}} \qquad\qquad [1]$$

where $\theta_{fb}$ represents the rotation angle computed by the decoder subsystem at the STA 104. In various embodiments of the invention, the rotation angle may be represented as an m-bit binary value, which is selected at the STA 104 from $2^m$ candidate rotation angle values. The feedback information transmitted by the STA 104 to the AP 102 may comprise the selected rotation angle $\theta_{fb}$ and or the corresponding computed rotation factor c.

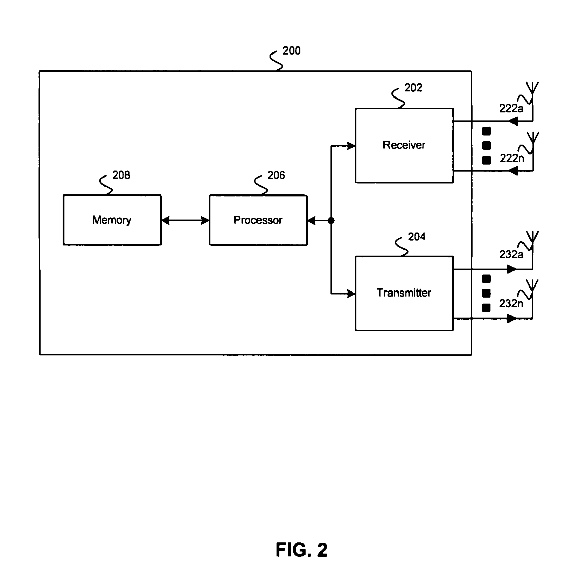

FIG. 2 is an exemplary transceiver comprising a plurality of transmitting antennas and a plurality of receiving antennas, which may be utilized in connection with an embodiment of the invention. Referring to FIG. 2, there is shown a transceiver system 200, a plurality of receiving antennas 222a...222n and a plurality of transmitting antennas 232a... 232n. The transceiver system 200 may comprise a receiver 202, a transmitter 204, a processor 206, and a memory 208. Although a transceiver is shown in FIG. 2, transmit and receive functions may be separately implemented.

In accordance with an embodiment of the invention, the processor 206 may enable digital receiver and/or transmitter functions in accordance with applicable communications standards. The processor 206 may also perform various processing tasks on received data. The processing tasks may comprise computing channel estimates, which may characterize the wireless communication medium, delineating PDU boundaries in received data, and computing PDU statistics, for example packet error rate statistics, which may be indicative of the presence or absence of detected bit errors in received PDUs.

The receiver 202 may perform receiver functions that may comprise, but are not limited to, the amplification of received RF signals, generation of frequency carrier signals corresponding to selected RF channels, for example uplink channels, the down-conversion of the amplified RF signals by the generated frequency carrier signals, demodulation of data contained in data symbols based on application of a selected demodulation type, and detection of data contained in the demodulated signals. The RF signals may be received via one or more receiving antennas 222a...222n. The data may be communicated to the processor 206.

The transmitter 204 may perform transmitter functions comprising modulation of received data to generated data symbols based on application of a selected modulation type, generation of frequency carrier signals corresponding to selected RF channels, for example downlink channels, the up-conversion of the data symbols by the generated frequency carrier signals, and the generation and amplification of RF signals. The data may be received from the processor 206. The RF signals may be transmitted via one or more transmitting antennas 232a...232n.

The memory 208 may comprise suitable logic, circuitry, interfaces and/or code that may enable storage and/or retrieval of data and/or code. The memory 208 may utilize any of a plurality of storage medium technologies, such as volatile memory, for example random access memory (RAM), and/or non-volatile memory, for example electrically erasable programmable read only memory (EEPROM). In the context of the present application, the memory 208 may enable storage of code for the computation and storage of rotation angles based on channel feedback information, the computation and storage of channel estimates based on the channel feedback information and/or the storage of channel feedback information, for example.

In operation, the processor 206 may enable the computation of rotation angles and/or rotation factors based on signals received at the receiver 202 via the plurality of receiving antennas 222a...222n. The received signals may enable the computation of channel estimates, which characterize the wireless communication medium through which the received signals were transmitted. The computed channel estimates may, in turn, enable the computation of the rotation angles and/or rotation factors. The processor 206 may enable the computed rotation angles and/or rotation factors to be transmitted by the transmitter 204 via the plurality of transmitting antennas 232a...232n. The computed rotation angles and/or rotation factors may enable generation of subsequent transmitted signals, in accordance with various embodiments of the invention.

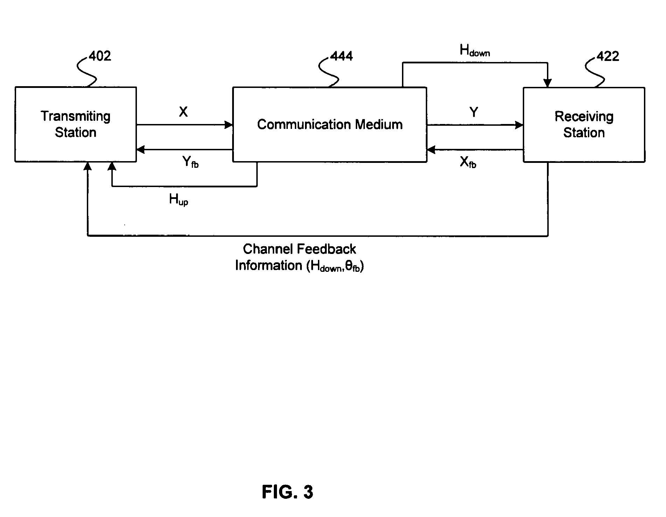

FIG. 3 is an exemplary diagram illustrating channel feedback, in accordance with an embodiment of the invention. Referring to FIG. 3, there is shown a transmitting station 402, a receiving station 422, and a communications medium 444. The communications medium 444 may represent a wireless communications medium. The transmitting station 402 may represent an AP 102 and the receiving station may represent an STA 104, for example. The transmitting station 402 may transmit a signal vector X to the receiving station 422 via the communications medium 444. The communications direction from the transmitting station 402 to the receiving station 422 may be referred to as a downlink direction. The signal vector X may comprise a plurality of signals, which are concurrently transmitted via one or more transmitting antennas that are located at the transmitting station 402. The transmitted signals, which are represented in the signal vector X, may travel through the communications medium 444. The transmitted signals may be altered while traveling through the communications medium 444. The transmission characteristics associated with the communications medium 444 may be characterized by the transfer function matrix, H. The transmitted signals, which are represented by the signal vector S, may be altered based on the transfer function matrix H. In the downlink direction, the transfer function matrix H may be referred to as $H_{down}$. The signals received at the receiving station 422 may be represented by the signal vector, Y. The signal vector Y may be generated based on the signal vector X and the transfer function matrix H as shown in the following equation:

$$Y = H_{down} \times X \qquad\qquad [2]$$

The coefficients, which are the matrix elements within the transfer function matrix H, may comprise channel estimate values, $h_m$. The channel estimate values may be computed based on at least a portion of the received signals represented by the signal vector Y. In an exemplary embodiment of the invention, the channel estimate values may be computed based on the portion(s) of the signals, transmitted by the transmitting station 402, which carry preamble data.

The receiving station 422 may compute a rotation angle $\theta_{fb}$ based on channel estimate values from the transfer function matrix $H_{down}$. Based on the rotation angle, the receiving station 422 may compute at least one rotation factor, c. In various embodiments of the invention, the rotation factor may be computed as shown in equation [1]. The receiving station 422 may communicate the computed transfer function matrix $H_{down}$ and/or rotation angle $\theta_{fb}$ to the transmitting station 402 as channel feedback information, as represented by the tuple $(H_{down}, \theta_{fb})$, for example. In an exemplary embodiment of the invention, the rotation angle $\theta_{fb}$, in the tuple $(H_{down}, \theta_{fb})$, may be represented as a 2-bit binary value. The receiving station 422 may communicate the channel feedback information $(H_{down}, \theta_{fb})$ via one or more signals, which are represented by the transmitted signal vector $X_{fb}$. The signals represented by the transmitted signal vector $X_{fb}$ may be transmitted to the transmitting station 402 via the communications medium 444. The signals represented by the signal vector $X_{fb}$ may be altered while traveling through the communications medium 444. The communications direction from the receiving station 422 to the transmitting station 402 may be referred to as an uplink direction. In the uplink direction the transfer function matrix may be referred to as $H_{up}$. The signals received at the transmitting station 402 may be represented by the signal vector, $Y_{fb}$. The signal vector $Y_{fb}$ may be generated based on the signal vector $X_{fb}$ and the transfer function matrix $H_{up}$ as shown in the following equation:

$$Y_{fb} = H_{up} \times X_{fb} \qquad\qquad [3]$$

The transmitting station 402 may utilize the rotation angle, $\theta_{fb}$. received in the channel feedback information to compute a corresponding rotation factor c. The transmitting station 402 may utilize the rotation factor, c, to generate subsequent transmitted signals.

In another exemplary embodiment of the invention, the receiving station 422 may communicate the channel feedback information, which comprises the computed transfer function matrix, H, and/or the computed rotation factor, c. The transmitting station 402 may utilize the received rotation factor, c, to generate subsequent transmitted signals.

In another exemplary embodiment of the invention, the signal vector $X_{fb}$ may comprise a quantized version of the rotation angle, $\theta_{fb}$, a quantized version of the computed transfer function matrix, H, and/or a quantized version of the computed rotation factor, c.

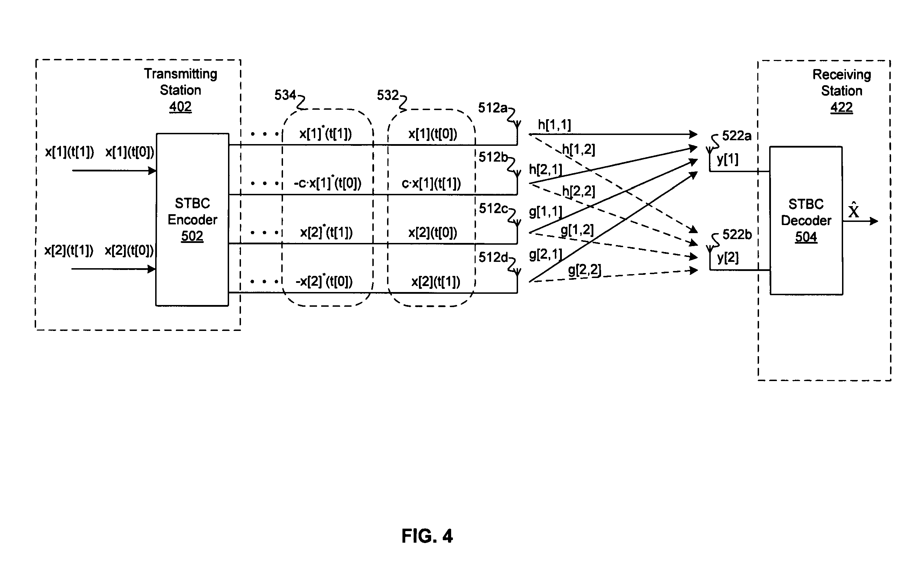

FIG. 4 is an exemplary block diagram of STBC with diversity reception, in accordance with an embodiment of the invention. Referring to FIG. 4, there is shown a transmitting station 402 and a receiving station 422. The transmitting station 402 may comprise an STBC encoder 502. The transmitting station 402 may utilize diversity transmission by concurrently transmitting a plurality of RF output signals via at least a portion of the transmitting antennas 512a, 512b, 512c and 512d. The concurrently transmitted plurality of RF output signals may form a signal group. Referring to FIG. 4, there is shown signal groups 532 and 534. Each signal group may comprise a plurality of concurrently transmitted codewords. Signal group 532 may be transmitted at a given time instant while signal group 534 may be transmitted at a subsequent time instant.

In an exemplary embodiment of the invention, the signal groups 532 and 534 may be generated based on OFDM symbols received at the STBC encoder 502 via a plurality of 2 spatial streams. Spatial stream 1 comprises an OFDM symbol received by the STBC encoder 502 at a time instant $t_0$, x[1](t[0]), and an OFDM symbol received at a time instant $t_1$, x[1](t[1]). Spatial stream 2 comprises an OFDM symbol received by the STBC encoder 502 at a time instant to, x[2](t[0]), and an OFDM symbol received at a time instant $t_1$, x[2](t[1]). Based on the received OFDM symbols, the STBC encoder 502 may generate a plurality of transmit chain signals, each of which may comprise a plurality of codewords. For the transmit chain signal associated with transmitting antenna 512a, the STBC encoder 502 may generate a codeword x[1](t[0]) at a time instant to' and a codeword x[1]$^*$(t[1]) at a time instant $t_1$', where x[1]$^*$(t[1]) represents a complex conjugate version of x[1](t[1]). For the transmit chain signal associated with transmitting antenna 512b, the STBC encoder 502 may generate a codeword c·x[1](t[1]) at a time instant $t_0$' and a codeword -c·x[1]$^*$(t[0]) at a time instant $t_1$', where c·x[1](t[1]) represents a rotated version of x[1](t[1]) based on the rotation factor, c. Similarly, -c·x[1]$^*$(t[0]) represents a rotated version of the complex conjugate version of x[1](t[0]). For the transmit chain signal associated with transmitting antenna 512c, the STBC encoder 502 may generate a codeword x[2](t[0]) at a time instant $t_0$' and a codeword ×[2]$^*$(t[1]) at a time instant $t_1$', where x[2]$^*$(t[1]) represents a complex conjugate version of ×[2](t[1]). For the transmit chain signal associated with transmitting antenna 512d, the STBC encoder 502 may generate a codeword x[2](t[1]) at a time instant $t_0$' and a codeword -x[2]$^*$(t[0]) at a time instant $t_1$', where -x[2]$^*$(t[0]) represents a rotated version of the complex conjugate version of x[2](t[0]). The signal group 532 comprises code words x[1](t[0]), c·x[1](t[1]), x[2](t[0]) and x[2](t[1]). The signal group 534 comprises code words x[1]$^*$(t[1]), -c·x[1]$^*$(t[0]), x[2]$^*$(t[1]) and -x[2]$^*$(t[0]). Collectively, the OFDM symbols x[1](t[0]), x[1](t[1]), x[2](t[0]) and x[2](t[1]) may be represented as an original codeword vector, X as shown in the following equation:

$$X = \begin{bmatrix} x[1](t[0]) \\ x[1](t[1]) \\ x[2](t[0]) \\ x[2](t[1]) \end{bmatrix} \qquad [4]$$

The receiving station 422 may comprise an STBC decoder 504. The receiving station 422 may receive signals via the receiving antennas 522a and 522b.

Signals transmitted from the transmitting antennas 512a, 512b, 512c and 512d travel through a wireless communication medium and may be received at the receiving antennas 522a and 522b. Signals traveling from the transmitting antenna 512a and received at the receiving antenna 522a may be modified based on the channel estimate value h[1,1]; signals traveling from the transmitting antenna 512b and received at the receiving antenna 522a may be modified based on the channel estimate value h[2,1]; signals traveling from the transmitting antenna 512c and received at the receiving antenna 522a may be modified based on the channel estimate value g[1,1]; and signals traveling from the transmitting antenna 512d and received at the receiving antenna 522a may be modified based on the channel estimate value g[2,1]. The aggregate of signals received at the receiving antenna 522a may be referred to as y[1]. Signals received at the receiving antenna 522a at a time instant $t_0$" may be referred to by y[1](t[0]). Signals received at the receiving antenna 522a at a time instant $t_1$" may be referred to by y[1](t[1]).

Signals traveling from the transmitting antenna 512a and received at the receiving antenna 522b may be modified based on the channel estimate value h[1,2]; signals traveling from the transmitting antenna 512b and received at the receiving antenna 522b may be modified based on the channel estimate value h[2,2]; signals traveling from the transmitting antenna 512c and received at the receiving antenna 522b may be modified based on the channel estimate value g[1,2]; and signals traveling from the transmitting antenna 512d and received at the receiving antenna 522b may be modified based on the channel estimate value g[2,2]. The aggregate of signals received at the receiving antenna 522b may be referred to as y[2]. Signals received at the receiving antenna 522b at a time instant $t_0$" may be referred to by y[2](t[0]). Signals received at the receiving antenna 522b at a time instant $t_1$" may be referred to by y[2](t[1]). In various embodiments of the invention, each of the channel estimate values h[1,1], h[1,2], h[2,1], h[2,2], g[1,1], g[1,2], g[2,1] and g[2,2] may comprise a plurality of distinct values, for example, a distinct value corresponding to each distinct carrier frequency within an RF channel bandwidth. Each distinct value may comprise a complex numerical value, a real numerical value and/or an imaginary numerical value.

The signals received at the STBC decoder 504, Y, may be represented as shown in the following equation:

$$\begin{bmatrix} y[1](t[0]) \\ y^*[1](t[1]) \\ y[2](t[0]) \\ y^*[2](t[1]) \end{bmatrix} = \begin{bmatrix} h[1,1] & c \cdot h[2,1] & g[1,1] & g[2,1] \\ -c^* \cdot h^*[2,1] & h^*[1,1] & -g^*[2,1] & g^*[1,1] \\ h[1,2] & c \cdot h[2,2] & g[1,2] & g[2,2] \\ -c^* \cdot h^*[2,2] & h^*[1,2] & -g^*[2,2] & g^*[1,2] \end{bmatrix} \begin{bmatrix} x[1](t[0]) \\ x[1](t[1]) \\ x[2](t[0]) \\ x[2](t[1]) \end{bmatrix} + \begin{bmatrix} n_0 \\ n_1 \\ n_2 \\ n_3 \end{bmatrix} \qquad [5]$$

where Y is represented by the vector on the left hand side of equation [4] and no, $n_1$, $n_2$ and $n_3$ represent signal noise. Equation [5] may be represented as follows:

$$\begin{bmatrix} y[1](t[0]) \\ y^*[1](t[1]) \\ y[2](t[0]) \\ y^*[2](t[1]) \end{bmatrix} = H \times \begin{bmatrix} x[1](t[0]) \\ x[1](t[1]) \\ x[2](t[0]) \\ x[2](t[1]) \end{bmatrix} + \begin{bmatrix} n_0 \\ n_1 \\ n_2 \\ n_3 \end{bmatrix} \qquad [6]$$

In various embodiments of the invention, the receiving station 422 may compute the channel estimate matrix, H, as shown in equations [5] and [6]. The receiving station 422 may process the received signal vector Y by pre-multiplying the received signal vector Y by a Hermitian, or complex conjugate transpose, version of the matrix H. The Hermitian of matrix H may be represented as $H^H$. The premultiplication of the signal vector Y by the Hermitian matrix $H^H$, may result in a multiplication of the matrices $H^H$ and H. This matrix product may be referred to as a square matrix, $H_{sq}$, as shown in the following equation:

$$H_{sq} = H^H \times H = \begin{bmatrix} \sum_j \sum_i \left( \left| h[i,j] \right|^2 \right) & 0 & \delta_1 & \delta_2 \\ 0 & \sum_j \sum_i \left( \left| h[i,j] \right|^2 \right) & -\delta_2 & \delta_1^* \\ \delta_1^* & -\delta_2 & \sum_j \sum_i \left( \left| h[i,j] \right|^2 \right) & 0 \\ \delta_2^* & \delta_1 & 0 & \sum_j \sum_i \left( \left| h[i,j] \right|^2 \right) \end{bmatrix} \qquad [7]$$

where:

$$\delta_1 = h^*[1,1] \cdot g[1,1] + c \cdot h[2,1] \cdot g^*[2,1] + h^*[1,2] \cdot g[1,2] + c \cdot h[2,2] \cdot g^*[2,2] \qquad [8a]$$

$$\delta_1 = c \cdot \left( h[2,1] \cdot g^*[2,1] + h[2,2] \cdot g^*[2,2] \right) + \left( h^*[1,1] \cdot g[1,1] + h^*[1,2] \cdot g[1,2] \right) \qquad [8b]$$

where $\delta_1$ may be represented using polar notation as a function of polar magnitudes $r_1$ and $r_2$ and polar angles $\theta_1$ and $\theta_2$ as shown in the following equation:

$$\delta_1 = cr_1 e^{j\theta_1} + r_2 e^{j\theta_2} \qquad [9]$$

Similarly, $\delta_2$ may be represented as shown in the following equations:

$$\delta_1 = h^*[1,1] \cdot g[2,1] - c \cdot h[2,1] \cdot g^*[1,1] + h^*[1,2] \cdot g[2,2] - c \cdot h[2,2] \cdot g^*[1,2] \qquad [10a]$$

$$\delta_1 = \left( h^*[1,1] \cdot g[2,1] + h^*[1,2] \cdot g[2,2] \right) - c \cdot \left( h[2,1] \cdot g^*[1,1] + h[2,2] \cdot g^*[1,2] \right) \qquad [10b]$$

where $\delta_2$ may be represented using polar notation as a function of polar magnitudes $r_3$ and $r_4$ and polar angles $\theta_3$ and $\theta_4$ as shown in the following equation:

$$\delta_2 = r_3 e^{j\theta_3} - cr_4 e^{j\theta_4} \qquad [11]$$

A feedback angle, $\theta_{fb}$, may be computed as shown in the following equations:

$$\theta_{fb} = \arg\min_{\theta}\left[\left(|\delta_1|^2 + |\delta_2|^2\right)\right] \qquad [12a]$$

$$\theta_{fb} = \arg\min_{\theta}\left[\left(\left|r_1 e^{j(\theta_1+\theta)} + r_2 e^{j\theta_2}\right|^2 + \left|r_3 e^{j\theta_3} - r_4 e^{j(\theta_4+\theta)}\right|^2\right)\right] \qquad [12b]$$

where $\theta$ represents an angle rotation value and $\theta_{fb}$ may represent the value for $\theta$ at which the lower bound value for the magnitude square values ($|\delta_1|^2, +|\delta_2|^2$) is minimized.

The angle rotation offset value $\theta$ may be represented by an m-bit value. In various exemplary embodiments of the invention, values m=1 and/or m=2 may be utilized. Consequently, the number of candidate values for $\theta$ may be $2^m$. In an exemplary embodiment of the invention, the value $\theta_{fb}$ may be determined by computing $2^m$ ($|\delta_1|^2+|\delta_2|^2$) values in equation [12b], wherein the value $\theta_{fb}$ may be determined based on the value $\theta$ that corresponds to the minimum lower bound value for the expression $\left(\left|r_1 e^{j(\theta_1+\theta)} + r_2 e^{j\theta_2}\right|^2 + \left|r_3 e^{j\theta_3} - r_4 e^{j(\theta_4+\theta)}\right|^2\right)$ among the $2^m$ computed values.

The computed angle feedback value $\theta_{fb}$ may be computed in a receiving station 422 and communicated as an m-bit binary value to a transmitting station 402. Based on the received angle feedback value, the transmitting station 402 may concurrently transmit a subsequent plurality of transmit chain signals, comprising a subsequent sequence of codewords, based on the corresponding angle rotation factor c as shown in FIG. 4. The receiving station 404 may receive the concurrently transmitted subsequent plurality of transmit chain signals and generate a substantially orthogonal plurality of received signals, $\hat{X}$, where $\hat{X}$ is a vector representation of estimated codeword values from the original codeword vector X as shown in equation [4].

Various embodiments of the invention may be practiced with SFBC communication diversity systems in a manner substantially as disclosed herein.

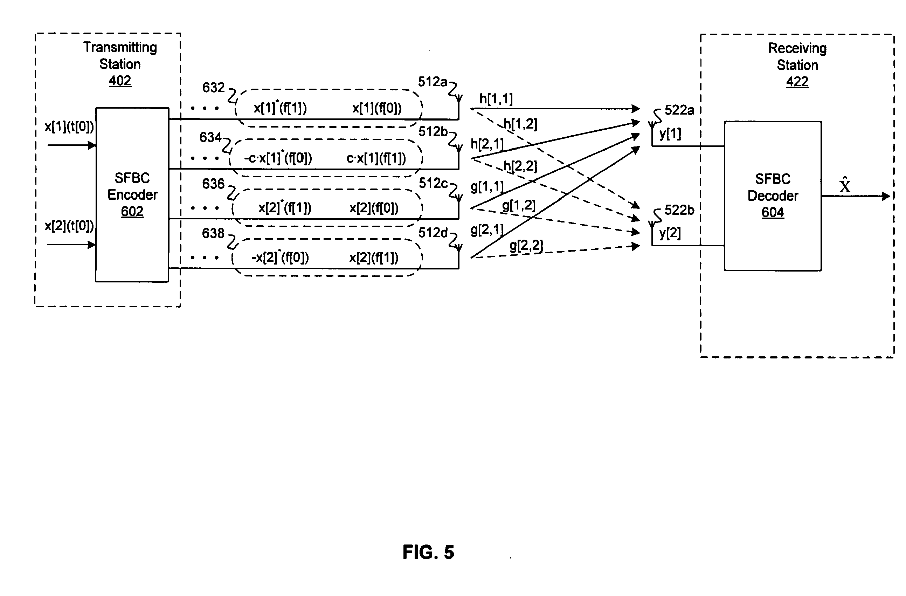

FIG. 5 is an exemplary block diagram of SFBC with diversity reception, in accordance with an embodiment of the invention. Comparing FIG. 5 to FIG. 4, in FIG. 5, the transmitting station 402 comprises an SFBC encoder 602 and the receiving station 422 comprises an SFBC decoder 604. Referring to FIG. 5, the SFBC encoder 602 generates transmit chain signals 632, 634, 636 and 638 based on OFDM symbols received via a plurality of 2 spatial streams received at a given time instant to. Spatial stream 1 comprises an OFDM symbol x[1](t[0]) and spatial stream 2 comprises an OFDM symbol x[2](t[0]). Based on the received OFDM symbol, x[1](t[0]), the SFBC encoder may generate a transmit chain signal 632 that comprises a plurality of codewords, x[1](f[0]) and x[1]*(f[1]), where x[1]*(f[1]) represents a complex conjugate version of the codeword x[1](f[1]) and where f[0] and f[1] represent distinct tone groups within an RF channel bandwidth. Tone group f[0] may comprise a subset of the carrier frequencies within the RF channel bandwidth while tone group f[1] may comprise a distinct subset of the carrier frequencies within the RF channel bandwidth. Collectively, the tone groups f[0] and f[1] may comprise the set of carrier frequencies within the RF channel bandwidth.

Based on the received OFDM symbol, x[1](t[0]), the SFBC encoder may generate a transmit chain signal 634 that comprises a plurality of codewords, c·x[1](f[1]) and c·x[1]*(f[0]), where x[1]*(f[0]) represents a complex conjugate version of the codeword x[1](f[0]), c·x[1](f[1]) represents a rotated version of the codeword x[1](f[1]) and c·x[1]*(f[0]) represents a rotated version of the codeword x[1]*(f[0]). Based on the received OFDM symbol, x[2](t[0]), the SFBC encoder may generate a transmit chain signal 636 that comprises a plurality of codewords, x[2](f[0]) and x[2]*(f[1]), where x[2]*(f[1]) represents a complex conjugate version of the codeword x[2](f[1]). Based on the received OFDM symbol, x[2](t[0]), the SFBC encoder may generate a transmit chain signal 638 that comprises a plurality of codewords, x[2](f[1]) and -x[2]*(f[0]), where -x[2]*(f[0]) represents a rotated version of the complex conjugate version of the codeword x[2](f[0]).

Collectively, the OFDM symbols x[1](f[0]), x[1](f[1]), x[2](f[0]) and x[2](f[1]) may be represented as an original codeword vector, X as shown in the following equation:

$$X = \begin{bmatrix} x[1](f[0]) \\ x[1](f[1]) \\ x[2](f[0]) \\ x[2](f[1]) \end{bmatrix}$$  [13]

The transmitting station 402 may concurrently transmit the transmit chain signals 632, 634, 636 and 638, which may be received as a received signal vector, Y, at the receiving station 422, where the received signal vector Y may be represented as shown in the following equation:

$$Y = \begin{bmatrix} y[1](f[0]) \\ y^*[1](f[1]) \\ y[2](f[0]) \\ y^*[2](f[1]) \end{bmatrix}$$  [14]

where y[i][j] represents signals that comprise frequencies from a $j^{th}$ tone group that may be concurrently received via an $i^{th}$ receiving antenna and $y^*[i][j]$ represents a complex conjugate version of y[i][j].

The receiving station may process the received signal vector Y substantially as disclosed above and as set forth above in equation [5] though equation [12].

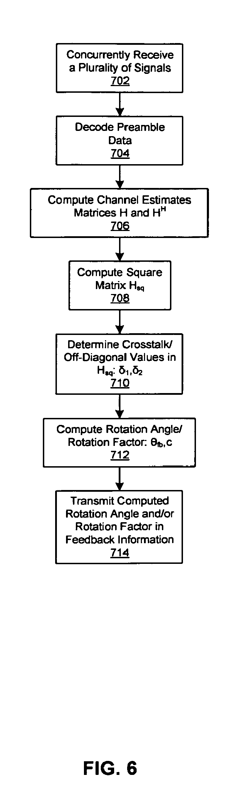

FIG. 6 is a flowchart illustrating exemplary steps for a 4x2 STBC diversity transmission system for 2 spatial streams at a receiving station, in accordance with an embodiment of the invention. Referring to FIG. 6, at step 702, a receiving station 422 may concurrently receive a plurality of signals via a plurality of receiving antennas. At step 704, the receiving station 422 may be operable to decode preamble data based on the received signals. In step 706, the receiving station 422 may be operable to compute channel estimate matrices H and $H^H$. At step 708, the receiving station 422 may be operable to compute a square matrix $H_{sq}$. At step 710, the receiving station 422 may be operable to determine off-diagonal values in the square matrix. The off-diagonal values may correspond to crosstalk components among the received signals. At step 712, the receiving station 422 may be operable to compute one or more rotation angle values, θ. One of the computed rotation angle values may be selected as a feedback rotation angle, $θ_{fb}$. The feedback rotation angle value may correspond to a minimum value for the sum or squares for the distinct off-diagonal values in the square matrix. A corresponding rotation factor value, $c = e^{j \cdot θ_{fb}}$, may also be computed based on the selected feedback rotation angle value. At step 714, the receiving station 422 may be operable to transmit the feedback rotation angle value, $θ_{fb}$, and/or the corresponding rotation factor value, c, to the transmitting station 402.

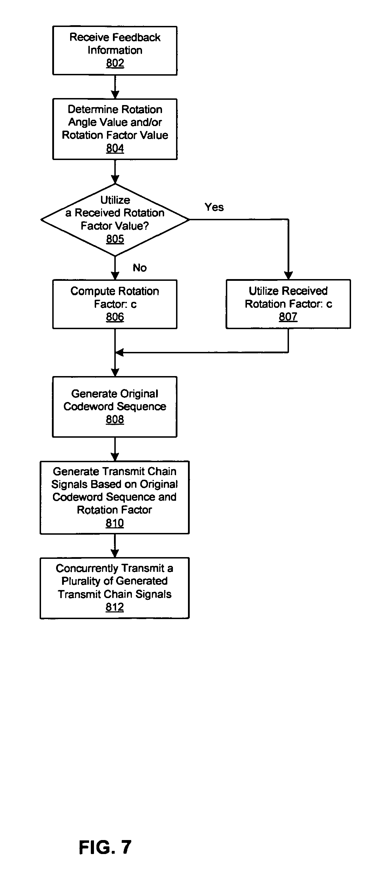

FIG. 7 is a flowchart illustrating exemplary steps for a 4x2 STBC diversity transmission system for 2 spatial streams at a receiving station, in accordance with an embodiment of the invention. Referring to FIG. 7, at step 802, the transmitting station 402 may receive feedback information. At step 804, the transmitting station 402 may be operable to determine a rotation angle and/or rotation factor based on the received feedback information. At step 805, the transmitting station 402 may determine whether to utilize a received rotation factor when generating subsequent transmit chain signals. In instances where the transmitting station determines that a received rotation factor may not be utilized, and/or in instances where a rotation factor value is not determined from the feedback information, at step 806, the transmitting station 402 may be operable to compute a rotation factor based on the received rotation angle. In instances where the transmitting station determines that a received rotation factor may be utilized and/or in instances where a rotation factor value is determined from the feedback information and/or in instances where a rotation angle value is not determined from the feedback information, at step 807, the transmitting station 402 may utilize the received rotation factor to generate subsequent transmit chain signals. At step 808, the transmitting station 402 may be operable to generate an original codeword sequence. The original codeword sequence may be generated based on OFDM symbols received via a plurality of 2 spatial streams.

At step 810, the transmitting station 402 may be operable to generate a plurality of transmit chain signals based on the original codeword sequence and the rotation factor. The transmitting station 402 may generate a plurality of 4 transmit chain signals. At step 812, the transmitting station 402 may be operable to concurrently transmit the generated transmit chain signals.

Aspects of a computer readable medium having stored thereon, a computer program having at least one code section for processing signals in a communication system, the at least one code section being executable by a computer for causing the machine to perform steps a 4x2 SFBC/STBC system with 2 spatial streams using angle feedback.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

**Claims**

1. A method for processing signals, the method comprising:

   performing by one or more processors and/or circuits:

   computing one or more channel estimate matrices based on a concurrently received plurality of signals;
   computing a square matrix based on said computed one or more channel estimated matrices;
   determining one or more distinct off-diagonal values in said computed square matrix;
   selecting one or more rotation angle values based on a minimum condition, wherein said minimum condition is based on said determined one or more distinct off-diagonal values; and
   transmitting a binary representation of said selected one or more rotation angle values as feedback information.

2. The method according to claim 1, comprising selecting said one or more rotation angle values from a plurality of candidate rotation angle values.

3. The method according to claim 2, comprising determining a number for said plurality of candidate rotation angle values based on a selected plurality of quantization bits.

4. The method according to claim 3, wherein said binary representation of said selected one or more rotation angle values is based on said selected plurality of quantization bits.

5. The method according to claim 2, comprising computing a sum of squared values among said one or more distinct off-diagonal values for each of said plurality of candidate rotation angle values.

6. The method according to claim 5, wherein said minimum condition corresponds to a minimum value among said computed plurality of sum of squared values.

7. A system for processing signals, the system comprising:

   one or more circuits that are operable to compute one or more channel estimate matrices based on a concurrently received plurality of signals;
   said one or more circuits are operable to compute a square matrix based on said computed one or more channel estimated matrices;

said one or more circuits are operable to determine one or more distinct off-diagonal values in said computed square matrix;

said one or more circuits are operable to select one or more rotation angle values based on a minimum condition, wherein said minimum condition is based on said determined one or more distinct off-diagonal values; and

said one or more circuits are operable to transmit a binary representation of said selected one or more rotation angle values as feedback information.

8. The system according to claim 7, wherein said one or more circuits are operable to select said one or more rotation angle values from a plurality of candidate rotation angle values.

9. The system according to claim 8, wherein said one or more circuits are operable to determine a number for said plurality of candidate rotation angle values based on a selected plurality of quantization bits.

10. A system for processing signals, the system comprising:

one or more circuits that are operable to determine a rotation angle value based on received feedback information;

said one or more circuits are operable to compute a rotation factor value based on said determined rotation angle value;

said one or more circuits are operable to generate a plurality of transmit chain signals based on said computed rotation factor value and a plurality of data symbol values; and

said one or more circuits are operable to transmit said generated plurality of transmit chain signals.

**FIG. 1**

FIG. 2

FIG. 3

FIG. 4

**FIG. 5**

EP 2 184 898 A1

Concurrently Receive
a Plurality of Signals
702

Decode Preamble
Data
704

Compute Channel Estimates
Matrices H and $H^H$
706

Compute Square
Matrix $H_{sq}$
708

Determine Crosstalk/
Off-Diagonal Values in
$H_{sq}$: $\delta_1, \delta_2$
710

Compute Rotation Angle/
Rotation Factor: $\theta_{fb}$,c
712

Transmit Computed
Rotation Angle and/or
Rotation Factor in
Feedback Information
714

**FIG. 6**

Receive Feedback
Information
802

↓

Determine Rotation
Angle Value and/or
Rotation Factor Value
804

↓

Utilize
a Received Rotation
Factor Value?
805

Yes →

No ↓

Compute Rotation
Factor: c
806

Utilize Received
Rotation Factor: c
807

↓

Generate Original
Codeword Sequence
808

↓

Generate Transmit Chain
Signals Based on Original
Codeword Sequence and
Rotation Factor
810

↓

Concurrently Transmit a
Plurality of Generated
Transmit Chain Signals
812

**FIG. 7**

Europäisches
Patentamt

European
Patent Office

Office européen
des brevets

# EUROPEAN SEARCH REPORT

Application Number

EP 09 01 3907

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOONSUK KIM ET AL: "Optimum 4-Transmit-Antenna STBC/SFBC with Angle Feedback and a Near-Optimum 1-Bit Feedback Scheme" IEEE COMMUNICATIONS LETTERS, vol. 11, no. 11, 1 November 2007 (2007-11-01), pages 868-870, XP011196977 IEEE SERVICE CENTER, PISCATAWAY, NJ, US ISSN: 1089-7798 * abstract * Sections I-IV ----- | 1-10 | INV. H04L25/02 H04L25/03 H04L1/06 |
| X | US 2008/253337 A1 (KIM JOONSUK [US]) 16 October 2008 (2008-10-16) * abstract * * paragraph [0003] - paragraph [0009] * * paragraph [0022] - paragraph [0033] * * paragraph [0038] - paragraph [0104] * * figures 7-10 * ----- | 1-10 | |
| X | KIM J ET AL: "STBC/SFBC for 4 Transmit Antennas with 1-bit Feedback" IEEE INTERNATIONAL CONFERENCE ON COMMUNICATIONS - ICC '08, 19 May 2008 (2008-05-19), pages 3943-3947, XP031266062 NJ, USA ISBN: 978-1-4244-2075-9 * abstract * Sections I-VI ----- | 1-10 | TECHNICAL FIELDS SEARCHED (IPC) H04L |
| A | US 2002/196842 A1 (ONGGOSANUSI EKO N [US] ET AL) 26 December 2002 (2002-12-26) * abstract * * paragraph [0004] - paragraph [0098] * ----- -/-- | 1-10 | |

The present search report has been drawn up for all claims

| Place of search | Date of completion of the search | Examiner |
|---|---|---|
| The Hague | 26 February 2010 | Dhibi, Youssef |

Europäisches
Patentamt

European
Patent Office

Office européen
des brevets

**EUROPEAN SEARCH REPORT**

Application Number

EP 09 01 3907

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHOI J ET AL: "Interpolation Based Transmit Beamforming for MIMO-OFDM With Limited Feedback" IEEE TRANSACTIONS ON SIGNAL PROCESSING, vol. 53, no. 11, 1 November 2005 (2005-11-01), pages 4125-4135, XP011141126 NY, USA ISSN: 1053-587X * abstract * Sections I-VI | 1-10 | |

-----

| | | | TECHNICAL FIELDS SEARCHED (IPC) |
|---|---|---|---|

The present search report has been drawn up for all claims

| Place of search | Date of completion of the search | Examiner |
|---|---|---|
| The Hague | 26 February 2010 | Dhibi, Youssef |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 01 3907

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2010

| Patent document cited in search report | Publication date | Patent family member(s) | Publication date |
|---|---|---|---|
| US 2008253337 A1 | 16-10-2008 | US 2008253478 A1 | 16-10-2008 |
| US 2002196842 A1 | 26-12-2002 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61113145 B

- US 11864611 B